# EUROPEAN PATENT APPLICATION

(11) **EP 2 829 306 A1**
(43) Date of publication of application: **28.01.2015**
(21) Application number: 14178518.8
(22) Date of filing: 25.07.2014
(51) Int. Cl.: A63F 9/02, A63G 25/00

(54) **Interactive vehicles**

(30) Priority: 26.07.2013 GB 201313336
(71) Applicant: Randoll Electrical Limited, Maresfield, East Sussex TN22 2DJ (GB)
(72) Inventor: Randoll, Joel, Maresfield, East Sussex TN22 2DJ (GB)
(74) Representative: MacLean, Martin David

(57) **Abstract**

A vehicle for use in an amusement ride, and an amusement ride comprising at least two such vehicles, the or each vehicle comprising a driver, a motive power source, a transmitter adapted to interact with a receiver mounted on another vehicle, a receiver adapted to interact with a transmitter mounted on another vehicle, a controller, and a pickup for receiving signals from outside the vehicle and for communicating with the controller, wherein the controller is adapted, on receipt of a first signal from the pickup, to offer the driver at least one of the options of activating or deactivating the transmitter and/or receiver and/or adjusting the amount of motive power provided by the source.

## Description

### FIELD OF THE INVENTION

The present invention relates to an interactive vehicle, that is, a vehicle adapted to interact with other vehicles, principally but not exclusively for the purposes of amusement or entertainment, and to a ride incorporating such vehicles.

### BACKGROUND ART

Amusement rides where a driver controls the vehicle he is in have been known for many years; the element of entertainment may be provided by the ability to interact physically with other vehicles (as in so-called "dodgems", or "bumper cars", see US3978934 for example), and/or by the drivers being able to race against other vehicles, usually around a set course. This invention is more relevant to the latter than the former, and is described below in relation to karts, or "go-karts", however the invention is equally applicable to other wheeled vehicles which race against each other in a defined area, or any other kind of conveyance (such as a boat, for example) which forms part of a racing ride around a set course.

One of the problems of existing go-karts rides is that they have been known for many years, and the amount of variety drivers can experience is limited. Although the skill required to race provides a certain amount of excitement and pleasure for a driver, there is a need to add variety and excitement and a new experience for today's experienced and/or jaded driver.

### SUMMARY OF THE INVENTION

Accordingly the present invention provides a vehicle for use in an amusement ride comprising at least two vehicles, the or each vehicle comprising a driver, a motive power source, a transmitter adapted to interact with a receiver mounted on another vehicle, a receiver adapted to interact with a transmitter mounted on another vehicle, a controller, and a pickup for receiving signals, not being signals from another vehicle, from outside the vehicle and for communicating with the controller, wherein the controller is adapted, on receipt of a first signal from the pickup, to offer the driver at least one of the options of activating or deactivating the transmitter and/or receiver and/or adjusting the amount of motive power provided by the source.

With such an arrangement, a driver can be presented at certain times during a race with options to interact with other vehicles: the driver can opt to activate his transmitter, so as to be able to "shoot", or "fire" at other vehicles; the driver can opt to deactivate his receiver, so as to be "shielded" from shots or firing from the transmitters on other vehicles, and the driver can opt to "boost" the power of his vehicle, this adds a new interactive element to a driving experience, presenting the driver with different ways to compete with other drivers and adding to the entertainment value.

The controller may be adapted, when the driver has not opted to deactivate the receiver, to activate it and, when the receiver receives a transmission from a transmitter on another vehicle, to adjust the power source so as to reduce the amount of motive power available. In this way, a driver who has opted to "fire" can aim his vehicle at another vehicle, trigger his transmitter (i.e. "fire" at the other car) and, if the aim is accurate, the effect is to slow down the other vehicle, giving the first driver an improved chance of being able to overtake the other vehicle. Because this option is related to an overtaking manoeuvre, the transmitter will normally be mounted so as to "fire" forwardly - on or near the front of the vehicle - and the receiver so as to receive transmissions from behind the vehicle - on or near the rear of the vehicle.

There may be a system to give the driver of a vehicle which has been "shot" an indication that has vehicle has lost power, such as a visible signal (a flashing light on the dashboard, for example) or an audible signal such as a buzzer or a bell. This system may also give a visual (or audible) signal to other drivers that the vehicle has lost power, such as a flashing light or even a smoke dispenser, so that other drivers know that their overtaking chances are improved. There may be a similar system for indicating to other drivers that the vehicle has increased power available to it, and/or that the driver has opted to "fire", so alerting the other drivers to the driver's attentions and enabling them to adjust their driving appropriately; there may, for example, be facsimile guns or rockets that come into view, with appropriate sound effects being generated as the driver "fires". There may be a visual or audible indicator alerting other drivers that the vehicle's receiver is deactivated, where the driver has opted to "shield" his vehicle from firing, so that other drivers do not waste time trying to shoot it.

The controller may be adapted to adjust the motive power source for a predetermined period of time, and then to restore the amount of motive power available to the level available prior to the adjustment. Thus there can be an arrangement where a driver has to try and decide which of the options he can choose from is most likely to assist him in the race, or to be most entertaining. Alternatively the controller may be adapted, when the pickup receives a second signal from the pickup, to withdraw the option from the driver and to deactivate the transmitter and the receiver and to return the motive power source to a predetermined setting. This can add a further element to the driving experience, because the senders for the signals picked up by the pickups can be disposed anywhere around a course, or track, and/or operated independently (by a ride controller, for example), forcing the driver to choose his option very quickly when he cannot be sure how long he is likely potentially to benefit from it.

There may be a display for indicating to a driver when options are available, and switches for the driver to signal his choice of option to the controller. In the case of a go-kart, this display could be mounted on the dashboard or on the steering wheel boss; the switches could be part of the display (as in a touch screen) or they could be mounted on the steering wheel (modern performance cars and Formula 1 racing cars have steering wheel-mounted buttons, so this arrangement makes the driving experience evocative of driving such exciting vehicles).

The invention extends to an amusement ride comprising two or more such vehicles, with the ride being configured as a course, circuit or track around which the vehicles drive. There may be one or more senders disposed at different locations around the course for sending the first and/or second signals to the pickups, and these can be intermittently or permanently operated, and/or they can be operated by a ride operator who is controlling the ride or race. In a race, the senders can be set to operate at specific locations (e.g. "on" (a first signal) at the start of a "straight" and "off" (a second signal) at the end of a straight, or the race could be made even more interesting by the operator varying where and when the on/off signals are sent to the vehicle pickups.

### BRIEF DESCRIPTION OF THE DRAWINGS

The invention will now be described by way of example, and with reference to the accompanying figures in which;
Figures 1a and 1b are front and rear perspective views respectively of a kart, a vehicle in accordance with the invention, and
Figure 2 is a view of an alternative steering wheel for the kart of Figure 1.

### DETAILED DESCRIPTION OF THE EMBODIMENTS

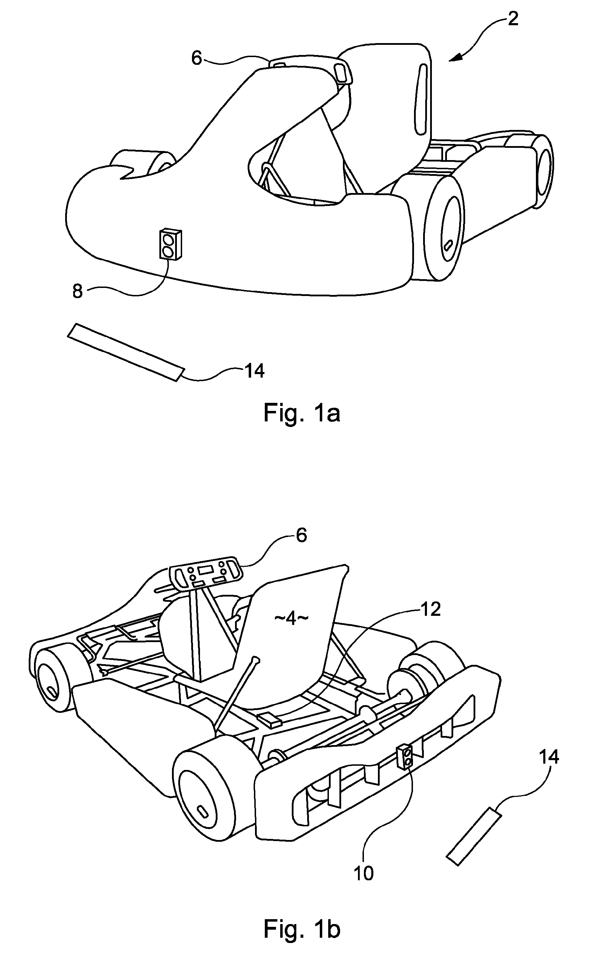

Figure 1a shows the front of a vehicle, a kart 2, and Figure 1b shows the same kart from the rear. The kart has a motor (not shown, for clarity), a driver's seat 4 and a steering wheel 6, and all the other necessary elements such as a chassis, wheels, suspension, etc. but which are not particularly relevant to the present invention. There is an infrared transmitter 8 mounted on the front of the kart 2, and an infrared receiver 10 mounted to the rear of the kart. There is a pickup 12 mounted underneath the kart which is adapted to receive signals from senders 14 which are mounted within the track over which the kart is driven (in Figure 1a the kart is driving towards a sender 14, and in Figure 1b the kart has driven over and is driving away from a sender). The transmitter 8, receiver 10 and the pickup 12 are operatively connected to a controller, such as an appropriately programmed microprocessor (not shown, though it could for example be mounted in the steering wheel 6). The controller is connected with the motor, and with the display on the steering wheel 6 (as described below).

The transmitter 8 and receiver 10 are adapted to communicate with transmitters and receivers on other vehicles (not shown) which the kart 2 is driven in competition with. The receivers and transmitters allow the vehicles to interact with one another; the transmitter 8 acts as a "gun", so that the driver can "shoot" at another kart and, if the infrared signal is received by the receiver 10 of another kart, the controller of the kart which has been shot registers that and reduces the maximum power available from the motor for a fixed period of time (by 50% for 5 seconds, for example). This allows the driver who has just "shot" the kart to overtake while the speed of the "shot" kart is reduced.

The senders 14 (which can be induction loops buried in the track surface, or lights aimed upwardly) are disposed around the race track and interact with the pickups 12 on the vehicles as they pass over the senders; when a pickup 12 passes over a sender 14 it reacts to the electromagnetic or light signal from the sender and signals the kart controller to activate an options menu for the driver. The driver can choose between the options of "shoot", "shield" or "boost"; the shoot option has already been described, the shield option acts to deactivate the driver's receiver 10, so that his kart cannot be shot, and the boost option temporarily increases the maximum power available from the motor.

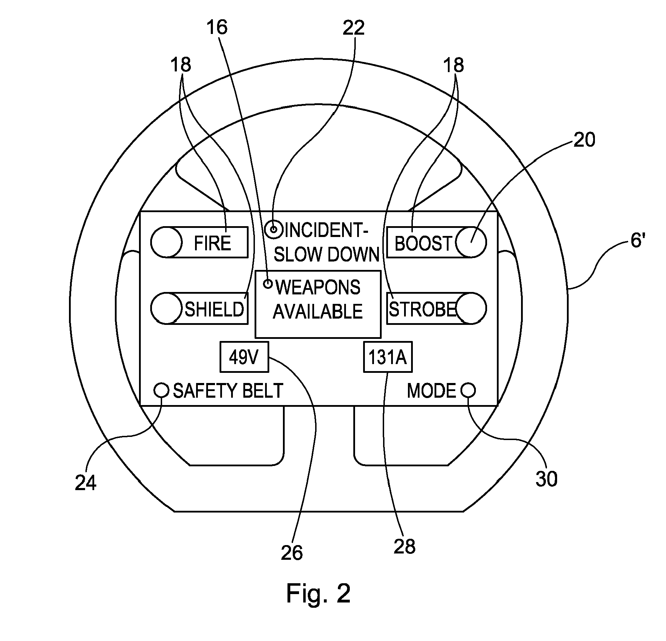

The kart driver is alerted that he has options to choose between via a display 16 on the steering wheel 6' (see Figure 2) which presents the driver with a visual menu of options; there may in addition be other alerts, such as a buzzer and/or a flashing light; the driver also chooses between the options available via this steering wheel. There are several function display/buttons 18, at least one for each option, which the driver activates by pressing the appropriate button 20, the display then lights up to show which option has been chosen. The steering also has various other displays/switches, such as an incident warning light 22 (activated externally when there has been an accident somewhere on the course for example), a seat belt warning light 24, displays for voltage 26 and current 28 (for an electric vehicle) and a mode select switch 30 for changing the displays and/or functions on the steering wheel.

The driver may be restricted to choose only one of the options made available to him, or he may be able to choose several, together or in sequence, depending on how the controller is programmed; and this programming can be varied between races so as to make the race/ride more interesting and exciting for the competitors. In the course of a race a driver may be given options allowing him to interact with the other vehicles he is racing against, so as to change the maximum speed of his or another car so as to make overtaking more feasible, thus making the ride experience more fun.

It will of course be understood that many variations may be made to the above-described embodiment without departing from the scope of the present invention. For example, the vehicle can be a kart as illustrated or any other kind of vehicle which races against other, similar vehicles around a predetermined course equipped with senders. The vehicle can be driven by an internal combustion engine, or by an electric engine; an electric vehicle may carry batteries for power, or it may drive over a special track (such as one with runs of electrical conductors carrying alternating positive or negative charges separated by insulating strips, as is known in the art) from which it draws electrical power by way of a suitable arrangement of brushes on the underside of the vehicle. The boost option may be achieved by the motor, which is normally restricted to less than the maximum power, having the restriction temporarily removed (by appropriate throttling arrangements in an internal engine-powered vehicle, or by taking a power resistor out of the power circuit in the case of an electric vehicle). For example, the motor may be restricted to 80% of its maximum power in normal usage, so that if the boost option is chosen the restriction is removed and the driver then has 25% more power. The senders are shown mounted in the floor over which the kart drives, but they could equally be mounted on the sides of the track or above it (with the pickups being mounted appropriately on the kart, rather than as shown). The senders can be randomly operated, or controlled by a race operator so as to be activated at specific times or points in a race, and the signals from the sender can activate or deactivate the kart controller via the pickup. There may be "repeaters" mounted on the outside of the vehicle to notify other drivers what option has been chosen and is currently active; these repeaters can be bright LEDs or other lights, audible signals or, in the case of the "shoot" option, dummy guns which raise from the bodywork of the vehicle when active. The percentage values for the boost option and for when a vehicle is shot given above are exemplary only, and other values are possible. Where different variations or alternative arrangements are described above, it should be understood that embodiments of the invention may incorporate such variations and/or alternatives in any suitable combination.

## Claims

1. A vehicle for use in an amusement ride comprising at least two vehicles, the or each vehicle comprising a driver, a motive power source, a transmitter adapted to interact with a receiver mounted on another vehicle, a receiver adapted to interact with a transmitter mounted on another vehicle, a controller, and a pickup for receiving signals other than signals transmitted by a vehicle from outside the vehicle and for communicating with the controller, wherein the controller is adapted, on receipt of a first signal from the pickup, to offer the driver at least one of the options of activating or deactivating the transmitter and/or receiver and/or adjusting the amount of motive power provided by the source.

2. A vehicle according to Claim 1 wherein the controller is adapted, when the driver has not opted to deactivate the receiver to activate it and, when the receiver receives a transmission from a transmitter on another vehicle, to adjust the power source so as to reduce the amount of motive power available.

3. A vehicle according to Claim 2 wherein the controller is adapted, when the receiver receives transmissions from transmitters on more than one other vehicle, to reduce the motive power cumulatively, in proportion to the number of separate transmissions received.

4. A vehicle according to Claim 2 or 3 comprising an indicator adapted to give a visual indication to the driver and/or to the drivers of other vehicles that the motive power has been reduced.

5. A vehicle according to any preceding claim wherein the controller is adapted, when the driver has opted to adjust the motive power source, to adjust the power source so as to increase the amount of motive power available.

6. A vehicle according to any preceding claim comprising an indicator adapted to give a visual indication to the driver and/or to the drivers of other vehicles that the driver has opted to activate his transmitter.

7. A vehicle according to any preceding claim comprising an indicator adapted to give a visual indication to the driver and/or to the drivers of other vehicles that the driver has opted to deactivate his receiver.

8. A vehicle according to any preceding claim wherein the controller is adapted to adjust the motive power source for a predetermined period of time, and then to restore the amount of motive power available to the level available prior to the adjustment.

9. A vehicle according to any of Claims 1 to 7 wherein the controller is adapted, when the pickup receives a second signal from the pickup, to withdraw the option from the driver and to deactivate the transmitter and the receiver and to return the motive power source to a predetermined setting.

10. A vehicle according to any preceding claim wherein the pickup is adapted to receive infrared, visible light or electromagnetic signals.

11. A vehicle according to any preceding claim comprising a display for indicating to a driver when options are available, and switches for the driver to signal his choice of option to the controller.

12. An amusement ride comprising two or more vehicles according to any preceding claim, wherein the ride is configured as a course around which the vehicles drive.

13. An amusement ride according to Claim 12 comprising one or more senders disposed at different locations around the course for sending the first and/or second signals to the pickups.

14. An amusement ride according to Claim 13 comprising a ride controller whereby an operator controlling the ride can activate one or more senders to emit a first or second signal.

15. A vehicle substantially as hereinbefore described and with reference to the accompanying drawings.
